# FASCICULE DE BREVET EUROPEEN

(11) **EP 1 619 756 B1**
(45) Date de publication et mention de la délivrance du brevet: **30.11.2016**
(21) Numéro de dépôt: 05106678.5
(22) Date de dépôt: 21.07.2005
(51) Int. Cl.: H01R 4/30, F16B 37/04

(54) **Cage pour écrou de connexion électrique**
Käfig für eine Überwurfmutter zur elektrischen Verbindung
Cage for an electric connection nut

(30) Priorité: 23.07.2004 FR 0451644
(43) Date de publication de la demande: 25.01.2006
(73) Titulaire: AIRBUS OPERATIONS, 31060 Toulouse (FR)
(72) Inventeur: Tournier, Gilles, 31490 LEGUEVIN (FR); Klepka, Stéphanie, 31650 SAINT ORENS (FR)
(74) Mandataire: Ahner, Philippe

(56) Documents cités:
- EP-A1- 1 431 592
- DE-A1- 3 320 679
- DE-U1- 8 523 553
- GB-A- 127 246
- NL-C- 45 978
- US-A- 5 816 762

## Description

### DOMAINE TECHNIQUE ET ÉTAT DE LA TECHNIQUE ANTÉRIEURE

L'invention concerne le domaine des moyens de fixation, plus particulièrement dans le cas d'une connexion électrique.

Les systèmes de fixation par vis et écrou sont très anciens et très utilisés. Ils permettent d'assembler plusieurs pièces mécaniques et laissent la possibilité de démonter les ensembles constitués, pour modification ou maintenance. L'ajout de rondelles ou de plaquettes arrêtoirs augmente la fiabilité de ce type d'assemblage lors d'agressions au cours de l'utilisation, en particulier vis-à-vis des vibrations : celles-ci peuvent en effet favoriser un dévissage des écrous et donc entraîner la perte de l'unité de l'assemblage.

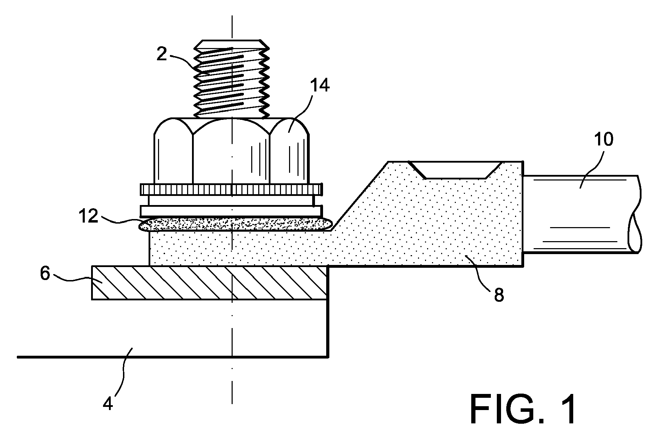

Ce type d'assemblage a aussi été utilisé pour le raccordement électrique. Ainsi, une cosse normalisée à plage ronde, solidaire d'un câble électrique, permet une mise en place et un entretien faciles, par le vissage et/ou le dévissage de la cosse sur un support conducteur. La figure 1 présente le montage utilisé le plus souvent pour de telles liaisons électriques.

Dans cet exemple, une tige filetée 2 est solidaire, en translation et rotation, d'un bloc isolant 4. Une partie conductrice 6, par exemple la patte d'un disjoncteur ou autre équipement, est soit solidaire du bloc isolant 4, soit montée contre lui par insertion sur la tige 2. Une cosse 8 est sertie sur l'âme d'un câble électrique 10, par exemple un câble multibrins avec une isolation périphérique. La cosse 8 est emmanchée sur la tige filetée 2 pour venir au contact de la partie conductrice 6, et une rondelle élastique 12 lui est superposée. La pression exercée par le vissage de l'écrou 14 sur la tige 2 pousse la rondelle 12 et écrase la cosse 8 sur la partie conductrice 6, ce qui permet le passage du courant électrique entre le câble 10 et l'équipement par la partie conductrice 6. Quelques variantes font appel à des rondelles « frein » ou élastiques ainsi qu'à des écrous spécifiques dit « auto-freinés » qui sont censés améliorer la tenue mécanique en prévenant le toujours possible desserrage.

L'assemblage schématisé sur la figure 1 permet un raccordement aisé en fabrication ainsi qu'une grande facilité d'échange du matériel connecté en cas de panne. De fait, ce type de montage est le plus utilisé pour les liaisons électriques à bord des aéronefs.

Toutefois, quelques problèmes ne sont pas résolus :
- il est possible d'oublier la rondelle 12, ou de la positionner entre l'équipement 6 et la cosse 8, ce qui altère, voire supprime, la liaison électrique ;
- la pression exercée sur la cosse 8, et donc sur l'équipement 6, est tributaire de l'effet ressort offert par la tige filetée 2. Lorsque l'environnement offre une large gamme de températures négatives et positives, ce qui est la norme en aéronautique, il peut y avoir une modification de la pression et donc du passage du courant ;
- la pression originelle exercée par l'écrou 14 devrait être rigoureusement calibrée pour offrir une bonne qualité électrique de la liaison. Or l'utilisation des éléments connexes de l'assemblage, en particulier les diverses rondelles 12 et surtout les écrous de type « auto-freinés », altèrent le couple appliqué du fait d'une mauvaise homogénéité de la valeur du couple de freinage alors ajouté.

Pour éviter le desserrage, il a été proposé d'ajouter une cage, puis un élément comblant l'espace entre vis et écrou (voir par exemple DE 33 206 79), ce qui cependant allonge notablement la mise en place.

Le document NL-C-45978 divulgue les caractéristiques du préambule de la revendication 1.

### EXPOSÉ DE L'INVENTION

La présente invention a pour principal objet de s'affranchir de ces défauts constatés et d'offrir une meilleure garantie dans le temps pour les fonctions requises. Notamment, elle assure une grande constance de la pression appliquée, et une immunité totale vis-à-vis des desserrages intempestifs.

Sous un de ses aspects, l'invention a pour objet un dispositif de connexion qui comprend un écrou associé à une cage d'interposition: la cage est insérée sur la tige filetée après positionnement des deux éléments, notamment électriques, à connecter, et avant l'écrou et les éventuelles rondelles, qui sont serrés dans cette cage.

L'invention concerne notamment une cage pour la connexion de forme générale cylindrique dans laquelle peuvent être insérés écrou et rondelles. La cage comprend une extrémité ouverte et une extrémité close par une paroi dans laquelle un orifice est foré afin de permettre le passage de la tige filetée. Des lamelles sont reliées à l'extrémité ouverte et dirigées vers l'intérieur de la cage. Elles peuvent se rabattre le long des parois, notamment lors de l'insertion de l'écrou, et font ensuite pression sur les éléments emmanchés sur la tige filetée dans la cage.

Les différents éléments de la cage peuvent avoir des formes différentes selon le type de connexion recherché : la cage elle-même est de préférence cylindrique de révolution, l'orifice de la paroi fermant la cage peut être circulaire ou asymétrique, le nombre de lamelles dépend de la taille de la cage. En particulier, les lamelles peuvent être de nature et forme différentes au sein d'une même cage, avec par exemple la présence de lamelles de freinage à côté de lamelles de maintien.

Avantageusement, la cage selon l'invention est associée à un écrou adapté, qui peut être de construction standard. L'écrou peut aussi comprendre une zone de diamètre supérieur qui permet de le bloquer par l'extrémité libre des lamelles de la cage, et qui permet l'utilisation d'une clé à tube pour mettre en place l'assemblage et/ou désolidariser l'ensemble. Une ou plusieurs rondelles peuvent être associées au dispositif de connexion.

De préférence, la cage selon l'invention est utilisée pour une connexion électrique.

### BRÈVE DESCRIPTION DES DESSINS

Les figures annexées permettront de mieux comprendre l'invention, mais ne sont données qu'à titre indicatif et ne sont nullement restrictives.
La figure 1, déjà décrite, représente un système de connexion électrique par écrou et tige filetée selon l'état de la technique.
Les figures 2A, 2B, 2C montrent un mode de réalisation des différentes parties d'un dispositif de connexion selon l'invention.
Les figures 3A et 3B représentent un système de connexion électrique utilisant un dispositif selon un mode de réalisation de l'invention.
La figure 4 montre un exemple de dispositif selon l'invention au cours de son assemblage.
Les figures 5A et 5B montrent des alternatives pour la partie de fond d'une cage selon l'invention.

### EXPOSÉ DÉTAILLÉ DE MODES DE RÉALISATION PARTICULIERS

L'invention se rapporte à une cage qui est susceptible d'être utilisée sur et avec le matériel existant. En particulier, la tige filetée 2 peut rester inchangée pour éviter les frais, qui pourraient devenir énormes, consécutifs à une modification de fond de l'équipement.

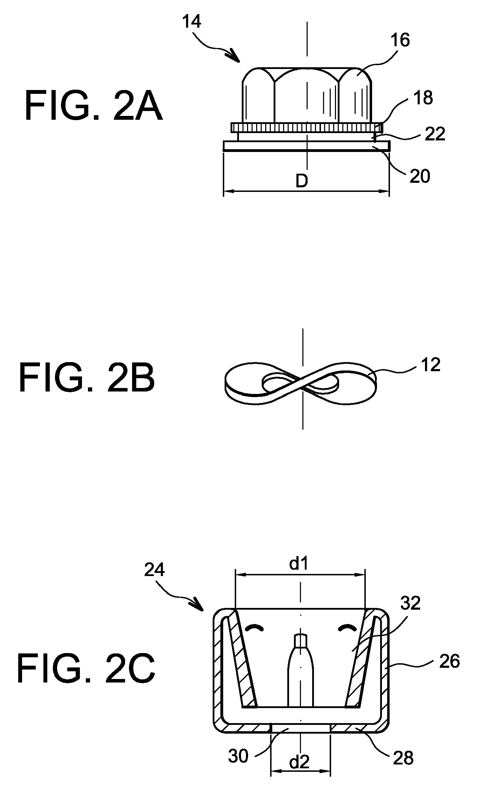

Par ailleurs, l'écrou utilisé avec la cage et dans le dispositif selon l'invention peut être identique à ceux utilisés pour les connexions actuelles. En particulier, l'écrou 14 présente une partie intérieure taraudée tout à fait classique de type ISO ; le filetage interne possède un diamètre calibré en mm ou en pouces. Avantageusement, et tel que représenté sur la figure 2A, l'écrou 14 présente extérieurement plusieurs zones distinctes. Une partie supérieure 16 est utilisée pour l'entraînement par vissage et dévissage ; de façon classique, elle peut comporter 6 pans, 12 pans etc. suivant la clé qui sera utilisée.

Adjacente à cette partie d'entraînement 16 se présente de façon avantageuse une partie cylindrique en relief (c'est-à-dire plus grande) 18, dont la périphérie offre un moletage. L'extrémité de l'écrou 14 dirigée vers les éléments à connecter, ou base de l'écrou, présente quant à elle de préférence une partie cylindrique lisse 20. Tel qu'il sera explicité par la suite, la partie de base 20 est avantageusement de diamètre D supérieur à la partie de moletage 18, ce qui offre une grande surface à la base de l'écrou 14. Entre le moletage 18 et la base 20 se trouve une gorge 22 facilitant les divers usinages.

Comme pour les assemblages classiques, une ou plusieurs rondelles élastiques 12 (figure 2B) peuvent s'interposer entre l'écrou 14 décrit ci-dessus et la cage 24, décrite en référence à la figure 2C.

La cage 24 présente la forme générale d'un cylindre de faible profondeur, de préférence un cylindre de révolution bien que toute forme puisse être envisagée. Le cylindre est composé d'une paroi latérale 26 et d'une paroi d'extrémité 28, plus communément appelée paroi de fond ou fond. La cage 24 peut être réalisée en tout matériau et selon les techniques connues ; par exemple, la cage 24 est construite de façon unitaire, de type embouti, en laiton, en cupronickel, en acier traité ou en acier inoxydable.

L'écrou 14 doit pouvoir pénétrer et tourner dans la cage 24, et donc la première extrémité, ouverte ou supérieure, de la paroi latérale 26 présente un diamètre interne d1 supérieur au diamètre maximal D de la base 20 de l'écrou 14 dans le cas de l'écrou schématisé en figure 2A. Le fond 28 de la cage 24 possède par ailleurs un trou 30 dans lequel peut passer la tige filetée 2 de l'assemblage. Le trou 30 est de préférence centré sur le fond 28, et peut être circulaire ; le deuxième diamètre d2 du cercle inscrit dans le trou 30 est alors supérieur au diamètre interne du filetage de l'écrou 14 afin de faciliter l'insertion de la cage 24 sur la tige 2.

La première extrémité de la paroi cylindrique latérale 26, ou partie supérieure, est dotée de plusieurs lamelles 32 rabattues vers l'intérieur : les lamelles 32 sont connectées directement, c'est-à-dire solidarisées, fixées, à une de leurs extrémités à la cage 24 et libres à l'autre. De préférence, les lamelles 32 font partie intégrante de la cage 24, c'est-à-dire qu'elles sont formées de façon unitaire avec elle. Les lamelles 32 présentent une élasticité entre une première position au repos dans laquelle elles sont schématisées sur la figure 2C, et une deuxième position dans laquelle l'angle qu'elles forment avec la paroi cylindrique 26 diminue. Afin de faciliter l'insertion, le passage formé par les extrémités libres des lamelles 32 est avantageusement plus grand que la tige filetée 2 et que l'orifice 30.

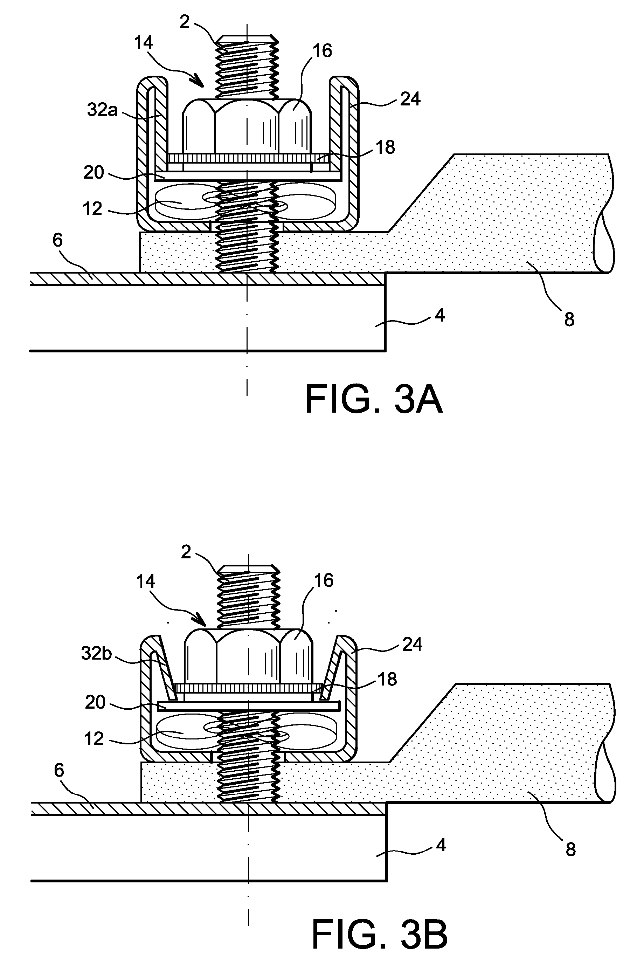

Pour réaliser une configuration assemblée similaire à la figure 1 (et schématisée dans les figures 3), la rondelle 12 est poussée dans le fond de la cage 24, où elle se retrouve emprisonnée après avoir passé les lamelles élastiques 32. De la même façon, l'écrou 14 est poussé vers le fond de la cage 24, et s'y trouve aussi prisonnier dès que la base 20 de l'écrou a dépassé l'extrémité libre de lamelles 32, celles-ci se rabattant sur les parties de l'écrou de moindre diamètre. La rondelle élastique 12 est alors prise en sandwich entre l'écrou 14 et la cage 24.

Tel que schématisé sur les figures 3, diverses configurations de lamelles 32, dont en particulier la longueur et/ou l'élasticité diffèrent, sont possibles et peuvent coexister au sein d'une même cage d'interposition 24. En particulier, en figure 3A sont représentées des lamelles de maintien 32a, qui se rabattent sur une partie de l'écrou 14, en particulier sur la base 20 de l'écrou 14, pour l'enserrer ; les lamelles élastiques 32a permettent ainsi le maintien de l'assemblage.

Des lamelles, schématisées sur la figure 3B, peuvent aussi induire un freinage, de type cliquet. Une ou plusieurs lamelles freins 32b sont calibrées pour que leur extrémité libre ait une forme qui lui permet de se bloquer contre le moletage 18 sans risque que l'extrémité ne glisse : les lamelles 32b freinent l'écrou 14 lors d'un desserrage volontaire ou accidentel. Afin d'obtenir une grande résistance au desserrage et une faible valeur de serrage, on peut exécuter des formes dissymétriques du moletage 18 et des lamelles freins 32b.

Le nombre de lamelles 32 dépend de l'utilisation de la cage 24 et du matériau qui les compose. On choisira préférentiellement trois lamelles pour les petits diamètres, ces lamelles assurant une double fonction de maintien de l'écrou 14 et de freinage grâce à des bords découpés ; pour des tiges filetées 2 et écrous 14 de gros diamètre, on préférera trois lamelles de maintien 32a associées à une ou plusieurs lamelles de freinage 32b, par exemple avec une alternance entre lamelles de maintien 32a et lamelles freins 32b.

L'ensemble formé grâce à l'invention, est compact, sans risques de perdre ou d'oublier un composant. La pression entre la cosse 8 et la partie conductrice 6 de l'équipement est calibrée et constante vis-à-vis de l'environnement, grâce à l'effet ressort compensatoire de la rondelle élastique 12. L'ensemble offre une résistance au desserrage grâce aux lamelles freins 32b élastiques. Une grande surface de contact 28 permet de diffuser les efforts et de réguler la pression sur la cosse 8.

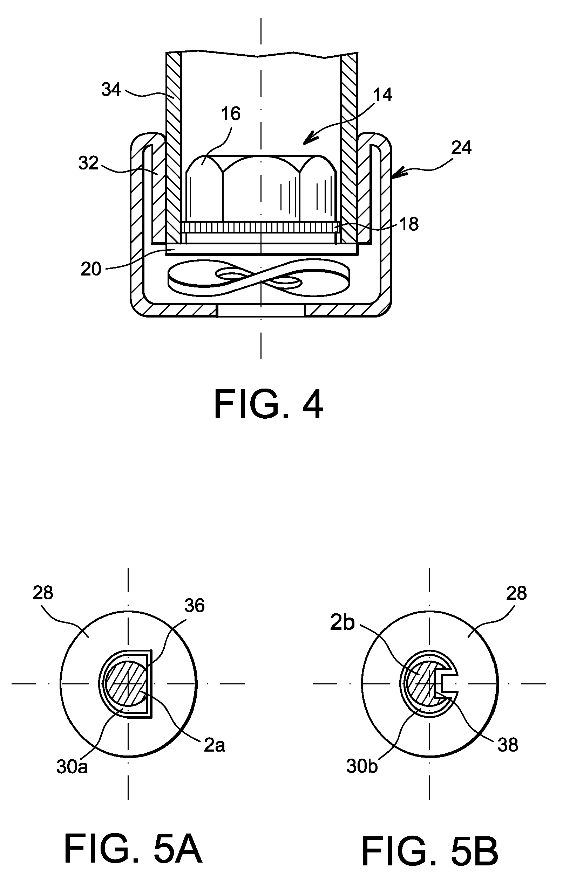

Suivant le choix des dimensions relatives de la partie supérieure 16 de l'écrou 14 et du diamètre intérieur d1 de la cage 24, l'assemblage peut être facilité par l'insertion d'une clé à tube 34 pour serrer ou desserrer le dispositif comme schématisé sur la figure 4. Ceci permet à la fois de maintenir l'écrou 14 sur la clé 34 pour la manipulation et de débrayer les lamelles freins 32b si elles sont présentes ; il est possible de ne pas débrayer les lamelles de maintien 32a afin que la cohésion de l'ensemble de la cage reste assurée. Le diamètre extérieur de cette clé à tube 34 est de préférence calibré pour offrir ces avantages sans forçage afin d'éviter de détruire l'élasticité des lamelles 32.

En particulier, le dispositif selon l'invention peut être démonté par l'utilisation d'une telle clé à tube 34 qui, lors de son insertion, repousse les lamelles 32 en les écartant de l'écrou 14, les lamelles 32 restant cependant verticales, ou presque, et en contact avec la clé à tube 34 du fait de leur élasticité. Ceci permet un dévissage de l'écrou 14 et le remplacement éventuel de certaines pièces de l'assemblage.

L'invention offre ainsi une grande facilité de manipulation dans un milieu confiné tel que celui par exemple des aéronefs, car l'écrou 14 est prisonnier de la clé 34 servant au serrage et desserrage et peut donc être manipulé. En outre, une valeur de serrage calibrée peut être appliquée, sans être affectée par une valeur de freinage aléatoire car le frein des lamelles est inactif pendant cette opération, toutes les lamelles 32 étant écartées de la zone moletée 18 et n'influant pas sur la rotation de l'écrou 14.

Grâce à l'invention, il est possible de conserver une grande réserve élastique au cours de l'utilisation et donc une pression constante pour une très bonne conductivité électrique. Une fois la rondelle élastique 12 serrée et écrasée, l'assemblage ainsi constitué offre toutes les qualités recherchées.

Il est possible pour augmenter la fiabilité de cet assemblage d'ajouter une forme calibrée sur la tige filetée 2, soit un méplat longitudinal 36, soit une fente 38, exécutée par une fraise de forme par exemple, comme schématisé sur les figures 5A et 5B. Une partie en relief de forme opposée sur l'orifice 30 de la cage 24 de l'écrou 14 empêche de cette façon toute rotation de la cage 24 par rapport à la tige filetée 2a, 2b, la translation relative des pièces restant libre pour le serrage et le desserrage de l'écrou 14.

On peut aussi, pour mieux calibrer la force de serrage, et donc la pression, adjoindre un dispositif spécifique sur l'écrou dans la partie supérieure 16 réservée à l'entraînement en rotation, par exemple une partie à casser, ou une résistance à la torsion.

## Revendications

1. Cage d'interposition (24) pour écrou (14) de connexion comprenant :
- une paroi cylindrique (26) entre une première et une deuxième extrémités, dans laquelle est inscrit un cercle d'un premier diamètre (d1) au niveau de la première extrémité,
- une paroi de fond (28) reliée à la deuxième extrémité et présentant un orifice (30) dans lequel est inscrit un cercle d'un deuxième diamètre (d2),
- au moins une lamelle (32) localisée à l'intérieur de l'espace délimité par la paroi cylindrique (26) et présentant une première et une deuxième extrémités, dans laquelle :
la deuxième extrémité de chaque lamelle (32) est libre,
- chaque lamelle (32) fait ressort entre une première position au repos où la lamelle (32) est inclinée d'un premier angle par rapport à la paroi cylindrique (26), et une deuxième position compressée où la lamelle (32) est inclinée d'un deuxième angle inférieur au premier angle,
- le passage délimité par la deuxième extrémité de chaque lamelle (32) est plus grand que l'orifice (30), **caractérisé en ce que** :
la première extrémité de chaque lamelle (32) est solidarisée à la première extrémité de la paroi cylindrique (26).

2. Cage selon la revendication 1, comprenant trois lamelles (32).

3. Cage selon l'une des revendications 1 ou 2, comprenant en outre des deuxièmes lamelles de freinage.

4. Cage selon l'une des revendications 1 à 3 dans laquelle l'orifice (30) est circulaire et centré sur la paroi de fond (28).

5. Cage selon l'une des revendications 1 à 3 dans laquelle l'orifice (30) comprend une partie asymétrique.

6. Cage selon l'une des revendications 1 à 5 dans laquelle la paroi cylindrique (26), la paroi de fond (28) et les lamelles (32) sont fabriquées de façon unitaire.

7. Dispositif de connexion comprenant une cage (24) selon l'une des revendications 1 à 6 et un écrou fileté (14), l'écrou (14) étant circonscrit dans un cercle de diamètre (D) inférieur au premier diamètre (d1) de la cage (24).

8. Dispositif de connexion selon la revendication 7 dans lequel le diamètre intérieur du filetage de l'écrou (14) est inférieur au deuxième diamètre (d2) du cercle inscrit dans l'orifice (30).

9. Dispositif de connexion selon l'une des revendications 7 ou 8, comprenant en outre une rondelle (12) de diamètre externe inférieur au premier diamètre (d1) de la cage.

10. Dispositif selon l'une des revendications 7 à 9, comprenant en outre une tige filetée (2) adaptée au diamètre de filetage de l'écrou (14).

11. Dispositif de connexion selon l'une des revendications 7 à 10 dans lequel l'écrou (14) comprend une partie de base (20) dont les dimensions extérieures (D) sont supérieures au reste de l'écrou.

12. Dispositif selon la revendication 11, comprenant en outre une clé à tube (34) dont le diamètre intérieur est inférieur aux dimensions (D) de la partie de base (20), et dont le diamètre extérieur est inférieur ou égal au premier diamètre (d1) de la cage (24).

13. Utilisation d'une cage selon l'une des revendications 1 à 6, ou d'un dispositif selon l'une des revendications 7 à 12 pour une connexion électrique.

14. Utilisation d'une cage selon l'une des revendications 1 à 6 ou d'un dispositif selon l'une des revendications 7 à 11, avec une clé à tube (34) de diamètre extérieur inférieur au premier diamètre (d1) de la cage (24) pour neutraliser les lamelles (32).

## Patentansprüche

1. Zwischenfügungskäfig (24) für eine Verbindungsmutter (14), der enthält:
- eine zylindrische Wand (26) zwischen einem ersten und einem zweiten Ende, in die ein Kreis eines ersten Durchmessers (d1) im Bereich des ersten Endes eingeschrieben ist,
- eine Bodenwand (28), die mit dem zweiten Ende verbunden ist und eine Öffnung (30) aufweist, in die ein Kreis eines zweiten Durchmessers (d2) eingeschrieben ist,
- mindestens eine Lamelle (32), die im Inneren des von der zylindrischen Wand (26) begrenzten Raums angeordnet ist und ein erstes und ein zweites Ende aufweist, wobei:
- das zweite Ende jeder Lamelle (32) frei ist,
- jede Lamelle (32) als Feder zwischen einer ersten Ruhestellung, in der die Lamelle (32) um einen ersten Winkel bezüglich der zylindrischen Wand (26) geneigt ist, und einer zweiten komprimierten Stellung wirkt, in der die Lamelle (32) um einen zweiten Winkel kleiner als der erste Winkel geneigt ist,
- wobei der vom zweiten Ende jeder Lamelle (32) begrenzte Durchgang größer ist als die Öffnung (30), **dadurch gekennzeichnet, dass**:
das erst Ende jeder Lamelle (32) fest mit dem ersten Ende der zylindrischen Wand (26) verbunden ist.

2. Käfig nach Anspruch 1, der drei Lamellen (32) enthält.

3. Käfig nach einem der Ansprüche 1 oder 2, der außerdem zweite Bremslamellen enthält.

4. Käfig nach einem der Ansprüche 1 bis 3, wobei die Öffnung (30) kreisförmig und auf die Bodenwand (28) zentriert ist.

5. Käfig nach einem der Ansprüche 1 bis 3, wobei die Öffnung (30) einen unsymmetrischen Bereich enthält.

6. Käfig nach einem der Ansprüche 1 bis 5, wobei die zylindrischen Wand (26), die Bodenwand (28) und die Lamellen (32) einzeln hergestellt werden.

7. Verbindungsvorrichtung, die einen Käfig (24) nach einem der Ansprüche 1 bis 6 und eine Gewindemutter (14) enthält, wobei die Mutter (14) in einem Kreis mit einem Durchmesser (D) kleiner als der erste Durchmesser (d1) des Käfigs (24) umschrieben ist.

8. Verbindungsvorrichtung nach Anspruch 7, wobei der Innendurchmesser des Gewindes der Mutter (14) kleiner als der zweite Durchmesser (d2) des in die Öffnung (30) eingeschriebenen Kreises ist.

9. Verbindungsvorrichtung nach einem der Ansprüche 7 oder 8, die außerdem eine Unterlegscheibe (12) mit einem Außendurchmesser kleiner als der erste Durchmesser (d1) des Käfigs enthält.

10. Vorrichtung nach einem der Ansprüche 7 bis 9, die außerdem eine Gewindestange (2) enthält, die an den Gewindedurchmesser der Mutter (14) angepasst ist.

11. Verbindungsvorrichtung nach einem der Ansprüche 7 bis 10, wobei die Mutter (14) einen Basisbereich (20) enthält, dessen Außenabmessungen (D) größer als der Rest der Mutter sind.

12. Vorrichtung nach Anspruch 11, die außerdem einen Rohrschlüssel (34) enthält, dessen Innendurchmesser kleiner als die Abmessungen (D) des Basisbereichs (20) ist, und dessen Außendurchmesser kleiner als der oder gleich dem ersten Durchmesser (d1) des Käfigs (24) ist.

13. Verwendung eines Käfigs nach einem der Ansprüche 1 bis 6 oder einer Vorrichtung nach einem der Ansprüche 7 bis 12 für eine elektrische Verbindung.

14. Verwendung eines Käfigs nach einem der Ansprüche 1 bis 6 oder einer Vorrichtung nach einem der Ansprüche 7 bis 11 mit einem Rohrschlüssel (34) mit einem Außendurchmesser kleiner als der erste Durchmesser (d1) des Käfigs (24), um die Lamellen (32) zu neutralisieren.

## Claims

1. Insertion cage (24) for a connection nut (14), comprising:
- a cylindrical wall (26) between a first end and a second end, in which a circle with a first diameter (d1) is inscribed at the first end,
- a bottom wall (28) connected to the second end and having an orifice (30) in which a circle with a second diameter (d2) is inscribed;
- at least one strip (32) located inside the space formed by the cylindrical wall (26) and having a first end and a second end, and in which:
- the second end of each strip (32) is free;
- each strip (32) acts as a spring between a first at rest position in which the strip (32) is inclined by a first angle from the cylindrical wall (26), and a second compressed position in which the strip (32) is inclined by a second angle smaller than the first angle,
- the opening formed by the second end of each strip (32) is larger than the hole (30),
Charaterised in that:
- the first end of each strip (32) is fixed to the first end of the cylindrical wall (26).

2. Cage according to claim 1, comprising three strips (32).

3. Cage according to claim 1 or 2, comprising second locking strips.

4. Cage according to any of claims 1 to 3, in which the hole (30) is circular and centred on the bottom wall (28).

5. Cage according to any of claims 1 to 3, in which the hole (30) comprises an asymmetric part.

6. Cage according to any of claims 1 to 5, in which the cylindrical wall (26), the bottom wall (28) and the strips (32) are made as a single part.

7. Connection device comprising a cage (24) according to any of claims 1 to 6, and a threaded nut (14), the nut (14) being inscribed in a circle with a diameter (D) smaller than the first diameter (d1) of the cage.

8. Connection device according to claim 7, in which the inner diameter of the thread of the nut (14) is smaller than the second diameter (d2) of the circle inscribed in the hole (30).

9. Connection device according to any of claims 7 or 8, also comprising a washer (12) for which the outside diameter is less than or equal to the first diameter (d1) of the cage (24).

10. Device according to any of claims 7 to 9, further comprising a threaded rod (2) adapted to the thread diameter of the nut (14).

11. Connection device according to any of claims 7 to 10, in which the nut (14) comprises a base part (20) for which the outside dimensions (D) are larger than the remaining part of the nut.

12. Device according to claim 11, also comprising a pipe wrench (34) for which the inside diameter is less than the dimensions (D) of the base part (20), and for which the outside diameter is less than or equal to the first diameter (d1) of the cage (24).

13. Use of a cage according to any of claims 1 to 6, or of a device according to any of claims 7 to 12, for an electrical connection.

14. Use of a cage according to any of claims 1 to 6, or of a device according to any of claims 7 to 12, with a pipe wrench (34) the outside diameter of which is less than or equal to the first diameter (d1) of the cage (24) to disable the strips (32).
